# EUROPEAN PATENT SPECIFICATION

(11) **EP 2 682 757 B1**
(45) Date of publication and mention of the grant of the patent: **22.04.2015**
(21) Application number: 13173062.4
(22) Date of filing: 20.06.2013
(51) Int. Cl.: G01P 1/02, G01P 3/487, G01D 5/244

(54) **A support for a rotation sensor in motor-impeller units of electric fans**
Halter für einen Drehsensor in Motorflügelradeinheiten elektrischer Lüfter
Support pour un capteur de rotation en unités moteur-roue de ventilateurs électriques

(30) Priority: 06.07.2012 IT PD20120217
(43) Date of publication of application: 08.01.2014
(73) Proprietor: SIT S.P.A., 35129 Padova (IT)
(72) Inventor: Mazzieri, Paolo, 60027 Osimo (AN) (IT)
(74) Representative: Fabris, Stefano

(56) References cited:
- EP-A1- 1 510 824
- DE-A1- 4 324 622
- US-A1- 2008 152 272
- US-B1- 6 581 464

## Description

The present invention relates to a support for a rotation sensor in a motor-impeller unit of an electric fan, having the features described in the preamble of Claim 1 which is the principal claim.

In the technical field of heating equipment, particularly wood pellet heating stoves, there is a known way of providing electric fans in this equipment, such a fan typically comprising a radial impeller driven by an electric motor mounted on a support mounting fixed to the body of the fan casing. To meet functional requirements, this electric fan is provided with a rotation sensor. The presence of the sensor is due to the need to provide feedback in the fan control system; this feedback is conveniently obtained by means of a Hall effect sensor, interacting with a magnet rotating integrally with the motor-impeller unit of the fan.

To meet operational requirements, the sensor and its control card must therefore be located in a position facing the magnet, which is normally of disc-like shape, in the proximity of the axis of rotation. The positioning is typically such that the sensor and its control card are housed in a special seat formed in an enclosing cover of the motor. The seat is integrated into the body of the cover, which is normally produced by moulding from plastic material. This solution gives rise to rather large overall dimensions, and also requires a degree of structural complexity in the cover and motor. In applications in the aforementioned technical field, however, where the aim is to reduce as far as possible the overall dimensions required by the components of the fan, and to simplify the construction and assembly of these components, the aforesaid limitations which may be encountered in the known solutions are particularly problematic.

A support having the features outlined in the preamble of claim 1 is known from US 6581464.

A primary object of the invention is to provide a support for a rotation sensor in motor-impeller units of electric fans which is structurally and functionally designed to overcome the problems encountered in respect of the aforementioned prior art, particularly a support such that the overall dimensions are reduced when it is applied to the motor-impeller unit, and such that an adequate degree of simplicity of the assembly of the sensor and its fastening to the unit is achieved.

This object and other objects which will emerge clearly hereinafter are achieved by a support for a rotation sensor in motor-impeller units of electric fans, produced in accordance with the appended claims.

Other features and advantages of the invention will become clear from the following detailed description of a preferred example of embodiment thereof, illustrated purely for guidance and in a non-limiting way in the attached drawings, in which:

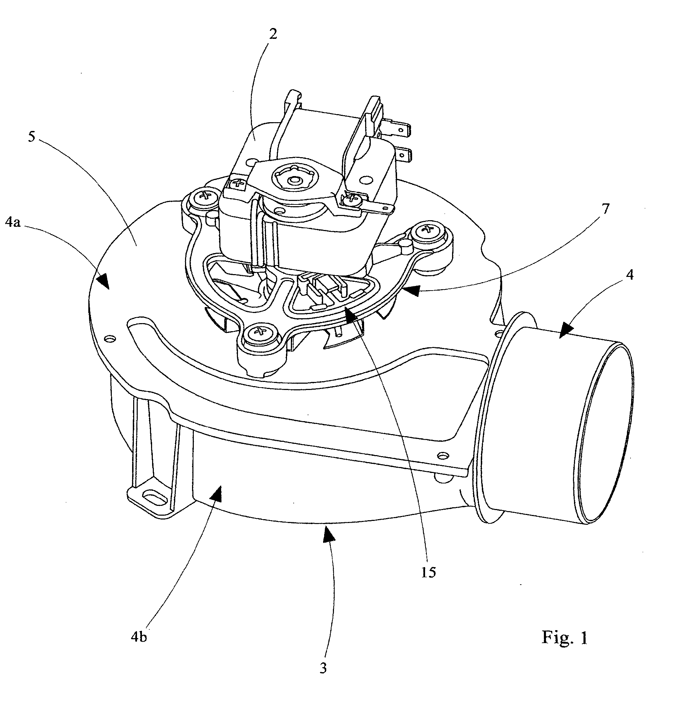

- Figure 1 is a perspective view of a motor-impeller unit of an electric fan provided with a support for a rotation sensor made according to the invention,
- Figure 2 is a partial perspective view of the unit of Figure 2,
- Figure 3 is an exploded perspective view of the unit shown in Figure 2,

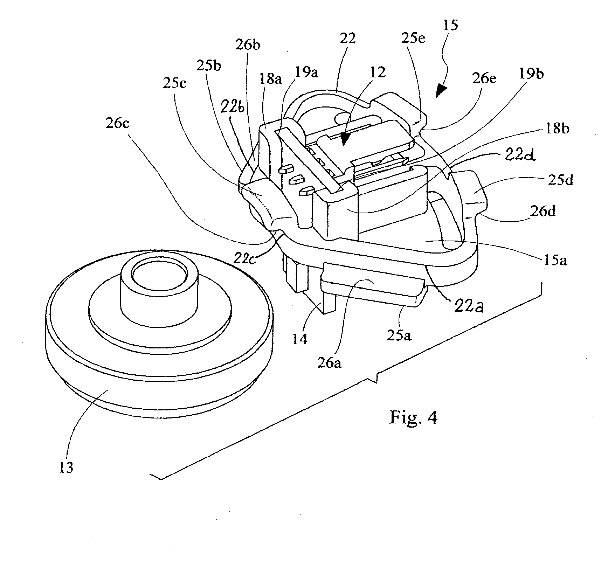

- Figure 4 is a perspective view on an enlarged scale of the support for a rotation sensor shown in the preceding figures, in association with the rotating magnet of the sensor, and
- Figure 5 is a perspective view in partial section of the motor-impeller unit of the preceding figures.

With reference to the aforementioned drawings, the number 1 identifies the whole of a motor-impeller unit of an electric fan, in which the motor and the fan are indicated by 2 and 3 respectively.

The fan 3 comprises an impeller of the centrifugal type (not shown), with a cylindrical cage configuration, which is housed in a scroll-shaped casing 4 formed from two half-shells 4a, 4b.

The half-shell 4a has a base wall 5 having a central hole for the passage of the shaft 6 of the impeller drive motor 2; the fastening of a mounting 7 for supporting the motor 2 is also provided on this wall. The mounting is fastened at three points with the interposition of bushes 8 of vibration-resistant rubber. The fastening points are conveniently arranged along a circular profile and are spaced apart from each other at regular angular intervals. The motor 2 is fastened to the mounting 7 by means of a pair of screws 9a engaged in corresponding threaded holes 9b formed in the support mounting 7.

The mounting 7 has a plate-like shape, the thickness of which is delimited between two opposing main surfaces 10a, 10b, and is also provided with a pair of through holes 11a, 11b, designed primarily for the purpose of lightening the mounting structure, although one (11a) of these holes is intended for a further function described in detail below.

The unit further comprises a Hall effect rotation sensor, indicated by 12, designed to interact, in use, with a magnet 13 rotating integrally with the motor shaft 6. The magnet 13 is conveniently made in a disc-like shape with a central hole 13a for mounting on the motor shaft.

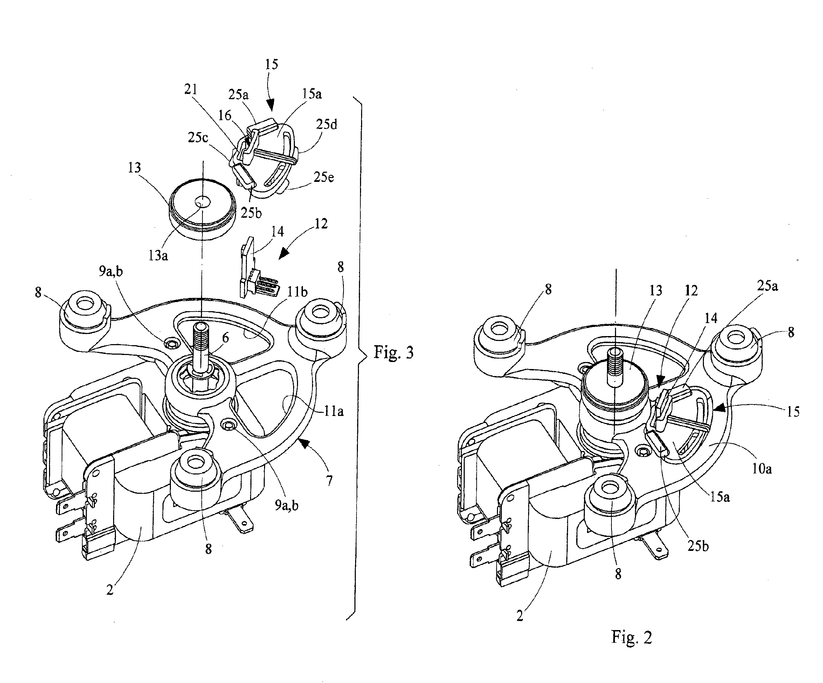

The sensitive part of the sensor 12 is integrated into a control card 14 of the sensor, shown clearly in Figure 3, which is intended to be mounted on the motor-impeller unit by means of a support indicated as a whole by 15.

According to a principal feature of the invention, the support 15 is provided with a seat 16 for removably retaining the card 14 of the sensor, and is also provided with removable snap-fitting means capable of interacting with the perimetric profile of one (11a) of the holes 11 of the support mounting, in such a way that the support 15 is retained removably on the mounting, thus ensuring, among other things, the correct positioning of the rotation sensor 12 and the rotating magnet 13 relative to one another.

In greater detail, the support 15 comprises a plate-like base 15a, in which the seat 16 for the sensor is formed. A pair of opposing projections 18a, 18b, provided with corresponding parallel grooves 19a, 19b facing each other, extend from the base 15a at the position of a hole 21 passing through the base. This structure enables the card 14 to be mounted on the support by the guided sliding insertion of the card (through the hole 21), with the sliding engagement of the card in the opposing grooves 19a, 19b, until the position in the seat 16 of the support is reached. Thus the card 14 is also fastened in an advantageously removable way to the support 15.

The base 15a of the support is surrounded by a perimetric edge 22, the edge profile of which substantially reproduces the edge profile of the hole 11a in the mounting, to provide a substantially positive coupling in the accommodation of the support 15 in the hole 11a. In other words, by means of the matching of the respective edge profiles, the support 15 is accommodated with limited play in the coupling, in the thickness of the mounting, within the hole 11a, the edge 22 lying substantially within the thickness of the mounting between the corresponding surfaces 10a, 10b of the latter.

For the purpose of fastening the support to the mounting, the removable snap-fitting means comprise a first and a second plurality of projections extending from the edge 22 of the support and intended to bear against one and the other of the opposing surfaces 10a, 10b of the mounting, as a result of the resilient deformation (during the engagement of the support in the hole) and subsequent resilient return to the non-deformed position (in order to ensure the retention of the support on the mounting).

More particularly, the edge 22 of the support has a substantially quadrilateral shape, in the sense that at least four successive portions, which may or may not be curved, and which are opposed to each other in pairs, can be identified on the edge, namely a first pair of opposed portions 22a, 22b and a second pair of opposed portions 22c, 22d.

Along the portions 22a, 22b, a first and a second projection 25a, 25b respectively extend from the base 15a, protruding from the profile of the edge 22, respective surfaces 26a, 26b being identified on these projections, being coplanar with each other, and defining the surface portions by which the support bears against the surface 10a of the mounting, when the support is snap-fitted into the hole 11a. In a corresponding way, further projections for bearing against the opposed surface 10b of the mounting extend along the portions 22c, 22d. A third projection 25c extends from the portion 22c, while a fourth and a fifth projection 25d and 25e extend from the portion 22d. Surface portions 26c, 26d and 26e, coplanar with each other, are identified on the projections 22c, 22d and 22e respectively, and act as surfaces by which the support bears against the surface 10b of the mounting. The aforesaid projections therefore act as catch-like elements for retaining the support in the mounting and can engage with the corresponding bearing surfaces of the mounting, following the resilient deformation of the support, during the insertion of the latter into the hole 11a, with a resilient return to the non-deformed condition to provide the support retaining action. Thus a mutual retention is provided with substantially relative interlocking between the coupled parts.

It is to be understood that the support 15 is similarly disengageable from the mounting by the resilient deformation of the support, which enables at least one of the projections to be disengaged from the corresponding bearing surface, thus releasing the support for extraction from the hole 11a.

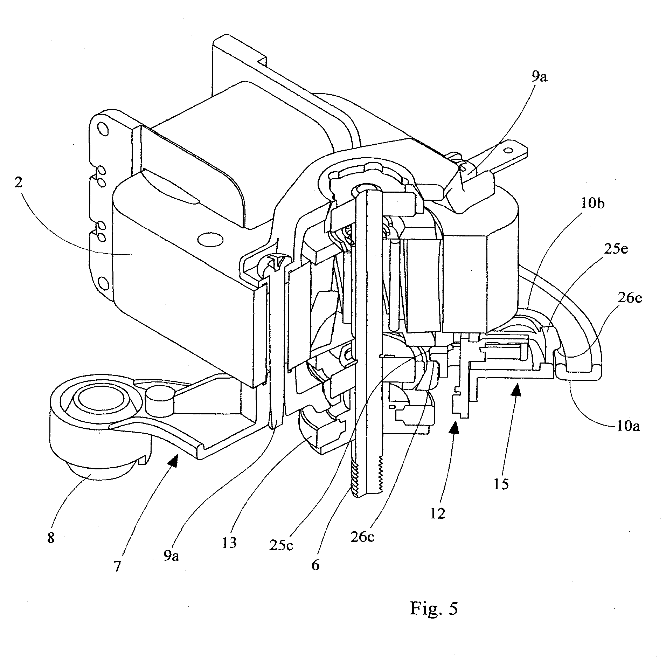

The cross-sectional view of Figure 5 shows the projections 25c and 25d with the respective surfaces 26c and 26d bearing against the surface 10b of the mounting. This surface forms a projecting edging of the perimetric profile of the hole 11a, as clearly shown in Figure 5. The projections 25c and 26d, 26e act for the purpose of attachment against this profile formation of the hole 11a.

Figure 5 also shows clearly that the support 15 has reduced overall dimensions, such that it can be positioned substantially within the overall dimensions of the mounting, in a space axially included between the motor and the wall of the casing which faces it.

The reduced overall dimensions are advantageously combined with simplicity of assembly, in respect of both the assembly of the card on the support and the assembly of the support on the mounting, this simplicity resulting in a fast and convenient mounting operation for which the operator does not require any special tools. This is particularly advantageous in spaces having reduced access, such as those usually available in the typical applications for which the technical solution of the invention is designed.

Thus the invention achieves the proposed objects while overcoming the aforesaid limitations of the prior art, and yielding the aforementioned advantages over the known solutions.

## Claims

1. A support for a rotation sensor (12) in a motor-impeller unit (1) of an electric fan (3), of the type which includes a motor support mounting (7) which can be fixed to an outer wall (5) of a scroll-shaped casing (4) of the fan (3), the rotation sensor (12) being designed to interact, in use, with a magnet (13) rotating integrally with the motor shaft, the support comprising a seat (16) for removably retaining an electronic circuit card (14) including the sensitive part of the rotation sensor (12), **characterized in that** it comprises removable snap-fitting means capable of interacting with a profile of a through hole (11a) formed in the mounting (7), in such a way that the support is retained removably on the mounting (7), thus ensuring the correct positioning of the rotation sensor (12) and the rotating magnet (13) relative to one another, and **in that** the removable snap-fitting means comprise a first and a second plurality of projections (25a-25e) extending from a perimetric edge (22) of the support, this edge (22) being receivable by means of a substantially positive coupling in the through hole (11a) of the mounting (7), the projections of the first and second pluralities (25a-25e) being designed to bear, respectively, on one and the other of the opposing surfaces (10a, 10b) which delimit the transverse thickness of the mounting (7) which has a plate-like shape, in such a way that the perimetric edge (22) of the support is retained removably within the through hole (11a) formed in the mounting (7).

2. A support according to Claim 1, wherein the perimetric edge (22) of the support is substantially quadrilateral in shape, a first and a second projection (25a, 25b) of the first plurality being provided on respective opposite sides (22a, 22b) of the quadrilateral profile, a third projection (25c) being provided on one (22c) of the other sides of the quadrilateral profile, and a fourth and a fifth projection (25d, 25e) being provided on the fourth side (22d) opposite the last mentioned side, the first and second projections (25a, 25b) defining a first surface by which the support bears against the mounting (7), a second and separate bearing surface being defined by the third, fourth and fifth projections (25c, 25d, 25e).

3. A support according to claim 1 or 2, wherein the support comprises guide means associated with the sensor housing seat (16), for the guided insertion of the sensor (12) into the seat (16) with a sliding engagement.

4. A support according to Claim 3, wherein the guide means comprise a pair of opposing grooves (19a, 19b) formed in corresponding projections (18a, 18b) extending from the support, the grooves (19a, 19b) running parallel to each other and facing each other so as to be slidingly engaged by corresponding portions of the sensor card (14) during the guided sliding movement by which the card is inserted into the corresponding seat (16).

## Patentansprüche

1. Halter für einen Drehsensor (12) in einer Motorflügelradeinheit (1) eines elektrischen Lüftertyps (3), der eine Motorhalterbefestigung (7) umfasst, die an einer Außenwand (5) eines spiralförmigen Gehäuses (4) des Lüfters (3) fixiert ist, wobei der Drehsensor (12) ausgebildet ist, um bei Anwendung mit einem Magneten (13) zusammenzuwirken, der sich einstückig mit der Motorwelle dreht, wobei der Halter einen Sitz (16) zum entfernbaren Halten einer elektronischen Steckkarte (14) aufweist, die den sensitiven Teil des Drehsensors (12) umfasst, **dadurch gekennzeichnet, dass** er eine entfernbare Schnappverschlusseinrichtung, die mit einem Profil einer Durchgangsbohrung (11a), die an der Befestigung (7) ausgebildet ist, zusammenwirken kann, derart aufweist, dass der Halter entfernbar auf der Befestigung (7) gehalten wird, um somit das korrekte Positionieren des Drehsensors (12) und des Drehmagneten (13) relativ zueinander zu gewährleisten, und dass die entfernbare Schnappverschlusseinrichtung eine erste und eine zweite Mehrzahl von Vorsprüngen (25a - 25e) aufweist, die sich von einer perimetrischen Kante (22) des Halters erstrecken, wobei diese Kante (22) mittels einer im Wesentlichen formschlüssigen Verbindung in der Durchgangsbohrung (11a) der Befestigung (7) aufnehmbar ist, wobei die Vorsprünge der ersten und zweiten Mehrheiten (25a - 25e) gestaltet sind, um jeweils auf der einen und der anderen der gegenüberliegenden Flächen (10a, 10b) aufzuliegen, die die querlaufende Dicke der Befestigung (7) begrenzt, die eine plattenförmige Form aufweist, und zwar in der Weise, dass die perimetrische Kante (22) des Halters entfernbar innerhalb der Durchgangsbohrung (11a), die in der Befestigung (7) ausgebildet ist, gehalten wird.

2. Halter gemäß Anspruch 1, wobei die perimetrische Kante (22) des Halters im Wesentlichen vierseitig ist, ein erster und ein zweiter Vorsprung (25a, 25b) der ersten Mehrzahl auf jeweiligen gegenüberliegenden Seiten (22a, 22b) des vierseitigen Profils vorgesehen sind, ein dritter Vorsprung (25c) auf einer (22c) der anderen Seiten des vierseitigen Profils vorgesehen ist, und ein vierter und ein fünfter Vorsprung (25d, 25e) auf der vierten Seite (22d), der der zuletzt erwähnten Seite gegenüberliegt, vorgesehen sind, wobei die ersten und zweiten Vorsprünge (25a, 25b) eine erste Fläche bilden, durch die der Halter gegen die Befestigung (7) anliegt, wobei eine zweite und eine separate Auflagefläche durch die dritten, vierten und fünften Vorsprünge (25c, 25d, 25e) gebildet werden.

3. Halter gemäß Anspruch 1 oder 2, wobei der Halter eine Führungseinrichtung, die mit dem Sensorgehäusesitz (16) verbunden ist, zum geführten Einsetzen des Sensors (12) in den Sitz (16) über einen Gleiteingriff aufweist.

4. Halter gemäß Anspruch 3, wobei die Führungseinrichtung ein Paar gegenüberliegende Nuten (19a, 19b) aufweist, die in entsprechenden Vorsprüngen (18a, 18b) ausgebildet sind, die sich vom Halter aus erstrecken, wobei die Nuten (19a, 19b) parallel zueinander verlaufen und einander zugewandt sind, um somit über entsprechende Bereiche der Sensorsteckkarte (14) während der geführten Gleitbewegung, durch die die Karte in den entsprechenden Sitz (16) eingeführt wird, gleitbeweglich in Eingriff zu stehen.

## Revendications

1. Support pour un capteur de rotation (12) dans une unité de moteur - roue (1) d'un ventilateur électrique (3), du type qui comprend une fixation de support de moteur (7) qui peut être fixée sur une paroi externe (5) d'un boîtier en forme de volute (4) du ventilateur (3), le capteur de rotation (12) étant conçu pour interagir, à l'usage, avec un aimant (13) tournant de manière solidaire avec l'arbre de moteur, le support comprenant un siège (16) pour retenir de manière amovible, une carte de circuit électronique (14) comprenant la partie sensible du capteur de rotation (12), **caractérisé en ce qu'**il comprend des moyens d'encliquetage amovibles pouvant interagir avec un profil d'un trou débouchant (11a) formé dans la fixation (7), de sorte que le support est retenu de manière amovible sur la fixation (7), garantissant ainsi le positionnement correct du capteur de rotation (12) et de l'aimant rotatif (13) l'un par rapport à l'autre, et **en ce que** les moyens d'encliquetage amovibles comprennent une première et une seconde pluralité de saillies (25a - 25e) s'étendant à partir d'un bord périmétral (22) du support, ce bord (22) pouvant être reçu au moyen d'un couplage sensiblement positif dans le trou débouchant (11a) de la fixation (7), les saillies des première et seconde pluralités (25a - 25e) étant conçues pour s'appuyer, respectivement sur l'une et l'autre des surfaces opposées (10a, 10b) qui délimitent l'épaisseur transversale de la fixation (7) qui a une forme de plaque, de sorte que le bord périmétral (22) du support est retenu de manière amovible à l'intérieur du trou débouchant (11a) formé dans la fixation (7).

2. Support selon la revendication 1, dans lequel le bord périmétral (22) du support a une forme sensiblement quadrilatère, une première et une deuxième saillie (25a, 25b) de la première pluralité étant prévues sur des côtés (22a, 22b) respectifs opposés du profil quadrilatère, une troisième saillie (25c) étant prévue sur l'un (22c) des autres côtés du profil quadrilatère, et une quatrième et une cinquième saillie (25d, 25e) étant prévues sur le quatrième côté (22d) opposé au dernier coté mentionné, les première et deuxième saillies (25a, 25b) définissant une première surface grâce à laquelle le support s'appuie contre la fixation (7), et une seconde surface d'appui séparée étant définie par les troisième, quatrième et cinquième saillies (25c, 25d, 25e).

3. Support selon la revendication 1 ou 2, dans lequel le support comprend des moyens de guidage associés avec le siège de logement de capteur (16), pour l'insertion guidée du capteur (12) dans le siège (16) avec une mise en prise coulissante.

4. Support selon la revendication 3, dans lequel les moyens de guidage comprennent une paire de rainures (19a, 19b) opposées, formées dans des saillies (18a, 18b) correspondantes s'étendant à partir du support, les rainures (19a, 19b) s'étendant parallèlement entre elles et se faisant face afin d'être mises en prise de manière coulissante par des parties correspondantes de la carte de capteur (14) pendant le mouvement coulissant guidé grâce auquel la carte est insérée dans le siège (16) correspondant.
